## Europäisches Patentamt

## European Patent Office

## Office européen des brevets

(19)

(11) Veröffentlichungsnummer: **0 006 594**
**B1**

(12) # EUROPÄISCHE PATENTSCHRIFT

(45) Veröffentlichungstag der Patentschrift:
**12.01.83**

(21) Anmeldenummer: **79102076.1**

(22) Anmeldetag: **22.06.79**

(51) Int. Cl.³: **G 01 S 5/06**, G 01 S 5/04,
G 01 S 5/12

(54) **Phasenvergleichs-Hyperbelverfahren zur Ortung flächengebundener Fahrzeuge und Einrichtung zur Durchführung des Verfahrens.**

(30) Priorität: **05.07.78 DE 2829558**

(43) Veröffentlichungstag der Anmeldung:
**09.01.80 Patentblatt 80/1**

(45) Bekanntmachung des Hinweises auf die Patenterteilung:
**12.01.83 Patentblatt 83/2**

(84) Benannte Vertragsstaaten:
**AT CH FR GB IT NL**

(56) Entgegenhaltungen:
**DE-A-2 137 846**
**DE-A-2 525 446**
**FR-A-1 230 585**
**US-A-3 419 865**
**US-A-3 705 404**

(73) Patentinhaber: **SIEMENS AKTIENGESELLSCHAFT**
**Berlin und München, Postfach 22 02 61,**
**D-8000 München 22 (DE)**

(72) Erfinder: **Thilo, Peer, Dr., Buchhierlstrasse 19,**
**D-8000 München 71 (DE)**

ACTORUM AG

Phasenvergleichs-Hyperbelverfahren zur Ortung flächengebundener Fahrzeuge
und Einrichtung zur Durchführung des Verfahrens

Die Erfindung bezieht sich auf ein Phasenvergleichs-Hyperbelverfahren zur Ortung flächengebundener Fahrzeuge, wobei das zu ortende Fahrzeug, auf Abfrage zyklisch, jeweils auf einen hochfrequenten Träger modulierte Messsignale aussendet, welche von mehreren getrennt angeordneten Empfangsstationen empfangen, demoduliert und mit einem von einem stationären Quarzoszillator erzeugten Bezugssignal gleicher Frequenz verglichen werden, wobei die jeweiligen Phasenunterschiede digital zu einer Zentrale übermittelt und zur Bildung von Laufzeitdifferenzen ausgewertet werden, um daraus die aktuelle Fahrzeugposition als Schnittpunkt der den Laufzeitdifferenzen entsprechenden Hyperbelkoordinaten zu ermitteln, und wobei ein Eichsender von Zeit zu Zeit Eichsignale zur Gewinnung von Korrekturwerten an die Empfangsstationen sendet. Ausserdem bezieht sich die Erfindung auf eine Einrichtung zur Durchführung dieses Verfahrens.

Bei einem bekannten Hyperbelortungsverfahren (DE-A-2137846) wird das in den einzelnen Empfangsstationen empfangene Messsignal jeweils demoduliert und über Leitungen zur Zentralstation weitergeleitet, wo dann durch direkten Phasenvergleich die Laufzeitdifferenzen ermittelt werden können. Dabei brauchen die absoluten Laufzeitwerte überhaupt nicht gemessen zu werden, da es nur auf die Differenzen ankommt; die systembedingten Laufzeiten in den Leitungen und Geräten werden dort durch Ortung eines Eichsenders eliminiert. Dieses bekannte System ermöglicht die Ortung von Fahrzeugen, beispielsweise in einem Stadtgebiet, mit recht guter Genauigkeit.

Bei ungünstigen geografischen Verhältnissen ergeben sich jedoch Probleme bei der Anwendung dieses Ortungsverfahrens. Wenn beispielsweise ein Stadtgebiet von hohen Bergen umgeben ist, lassen sich auf diesen Bergen zwar funktechnisch günstig die benötigten Empfangsstationen aufstellen, diese sind damit aber schwer zugänglich; vor allem fehlen in der Regel Leitungen zur Übertragung der Messsignale zur Zentrale wie auch zur Stromversorgung der Empfangsstation.

Anstelle der Weiterleitung der Messsignale zur Zentrale über Kabel ist bei einem anderen bekannten System (US-A-3419865) vorgesehen, die jeweilige Ankunftszeit der Messsignale bereits in den einzelnen Empfangsstationen gegenüber einer Referenzzeit zu messen und die Messergebnisse über Funk oder über Leitungen zur Zentrale zu übermitteln. Um in allen Empfangsstationen die gleiche Bezugszeit zu haben, werden dort die Quarzoszillatoren, welche jeweils hochgenaue Uhren steuern, in den einzelnen Empfangsstationen von Zeit zu Zeit gemeinsam durch ein Eichsignal von der Zentrale aus synchronisiert. Diese Synchronisierung in den verschiedenen voneinander weit entfernten Empfangsstationen ist jedoch verhältnismässig aufwendig, da zumindest für die Übertragung der Eichsignale von der Zentrale zu den Empfangsstationen jeweils Leitungen vorgesehen werden müssen. Besteht jedoch aus Gründen, die vorher beschrieben wurden, überhaupt keine Kabelverbindung zu den Empfagsstationen, so lässt sich auch eine Synchronisierung nicht mit befriedigender Genauigkeit durchführen. Für diesen Fall ist zwar dort auch noch die Möglichkeit angegeben, auf eine genaue Synchronisierung der Quarzoszillatoren in den einzelnen Empfängern zu verzichten und stattdessen Korrekturwerte zu ermitteln, die in einem zentralen Computer gespeichert und bei der Auswertung der Messergebnisse für die Fahrzeugortung zu berücksichtigen sind. Allerdings werden dort die Korrekturwerte nicht durch Abfrage eines Eichsenders im Abfragezyklus der Fahrzeuge gewonnen, sondern der Stand der Oszillatoren in den einzelnen Empfangsstationen muss über einen eigenen, von der Fahrzeugortung getrennten Abfragevorgang jeweils zum zentralen Computer übermittelt und dort durch Vergleich mit einer Zeitbasis zur Gewinnung von Korrekturwerten verwendet werden. Mit dieser von der normalen Fahrzeugmessung getrennten Abfrage der Empfangsstationen ist auch ein zusätzlicher gerätetechnischer Aufwand verbunden. Überdies arbeitet das System nach der US-A-3419865 mit einem Pulsmessverfahren, wobei von den Fahrzeugen jeweils nur ein Impuls ausgesendet und entsprechend in den Empfangsstationen kein Phasenvergleich, sondern eine reine Zeitmessung durchgeführt wird. Dieses Verfahren erfordert eine breitbandige Übertragung der Messsignale und ist im Gegensatz zum eingangs erwähnten Phasenvergleichsmessverfahren in vielen Ländern schon deshalb nicht anwendbar, weil die benötigten Frequenzbereiche nicht zur Verfügung stehen.

Aufgabe der Erfindung ist es, dass Ortungsverfahren der eingangs erwähnten Art durch ein einfaches Korrekturverfahren so zu verbessern, dass die einzelnen Empfangsstationen unabhängig von Leitungsverbindungen zur Zentrale werden. Dabei soll die hohe Messgenauigkeit erhalten bleiben, ohne dass ein hoher Kostenaufwand für eine genaue Laufzeitmessung in den Empfangsstationen durch entsprechend teure Geräte erforderlich ist.

Erfindungsgemäss wird bei dem Verfahren der eingangs erwähnten Art diese Aufgabe dadurch gelöst, dass die Eichsignale in gleicher Weise wie die Messsignale der Fahrzeuge ausgesendet, in den Empfangsstationen in dem Abfragezyklus für die Fahrzeuge eingeschlossenen und in der Zentrale ausgewertet werden, wobei durch Vergleich mit den aus der genau bekannten Position des Eichsenders errechneten Laufzeiten der Eichsignale Korrekturwerte für die unterschiedlichen Phasenlagen der Bezugssignale in den verschiedenen Empfangsstationen gewonnen und bei der Bildung der Hyperbelkoordination für die Fahrzeugortung berücksichtigt werden.

Bei dem erfindungsgemässen Verfahren werden also nicht die Quarzoszillatoren in den Empfangsstationen geeicht, sondern es werden durch Ortung eines Eichsenders wie er an sich bereits aus der DE-AS-2137846 bekannt ist, Korrekturwerte in der Zentrale gebildet, welche dann für die nachfolgenden Messungen berücksichtigt werden. Dabei können bei jeder Messung mit einer einzigen Korrektur nicht nur die Abweichungen des jeweiligen Quarzoszillators, sondern auch alle übrigen Ungenauigkeiten und Laufzeiten in den Geräten der Empfänger und der Zentrale berücksichtigt werden. Durch die erfindungsgemässe Kombination der Phasenmessung in den Empfangsstationen und der Ermittlung von Korrekturwerten für die Bezugssignale der Empfangsstationen kann die Hyperbelortung mit guter Genauigkeit und mit relativ geringen Kosten realisiert werden. In jeder Empfangsstation kann ein billiger Quarzoszillator mit relativ grosser Ungenauigkeit verwendet werden, da die Abweichungen ohnehin ständig gemessen und bei der Auswertung berücksichtigt werden. So besitzen diese Qarzoszillatoren eine relativ grosse statische Ungenauigkeit, nämlich eine gegenseitige Abweichung in der Grundfrequenz, die durch die nicht völlig identischen Abmessungen der Quarze bestimmt ist. Dieser systematische Fehler, der bei billigen Quarzen in der Grössenordnung von $10^{-6}$ liegt, führt zu einer kontinuierlichen Verschiebung der Bezugsfrequenzen gegeneinander.

Zu dem systematischen Fehler kommt aber noch eine Kurzzeitinstabilität, die zwar wesentlich geringer ist, aber für die Messgenauigkeit nicht vernachlässigt werden kann. Sie liegt etwa in der Grössenordnung von $10^{-7}$ bis $10^{-8}$ in 10 Sekunden und ist von verschiedenen Faktoren abhängig, beispielsweise von der Temperatur und von der Alterung des Quarzes.

Sämtliche durch die Quarzoszillatoren verursachten Ungenauigkeiten bei der Messung in den Empfangsstationen werden ohne zusätzliche Einrichtungen eliminiert. Dabei werden die unkorrigierten Messwerte für die Messsignale der Fahrzeuge wie des Eichsenders jeweils zur Zentrale übertragen. Erst dort werden bei der Ermittlung der Laufzeitdifferenzen gleichzeitig die Korrekturwerte aus den Messwerten des Eichsenders ermittelt und berücksichtigt. Im allgemeinen wird man nicht nach jedem Fahrzeugsignal auch den Eichsender anrufen, da dies zu zeitaufwendig wäre. Es genügt vielmehr, jeweils eine Anzahl von Fahrzeugen und dann wieder den Eichsender abzufragen. Da der hauptsächliche Fehler durch die statische Ungenauigkeit des Quarzoszillators bestimmt ist, können die Korrekturwerte zwischen den Aufrufen des Eichsenders durch Interpolation bzw. für die jeweils folgenden Messungen durch Extrapolation ermittelt werden. Die Häufigkeit der Korrekturen wird durch die Grösse der Kurzzeitinstabilität bestimmt. Sie kann beispielsweise in Abhängigkeit von der Grösse der erforderlichen Korrektur automatisch verändert werden.

Die in den einzelnen Empfangsstationen anfallenden Messwerte werden über einen Funkkanal zur Zentralstation übertragen. Dies geschieht zweckmässigerweise in Form von Telegrammen, welche die Daten von mehreren hintereinander abgefragten Fahrzeugen und evtl. des Eichsenders enthalten. Damit wird die Übertragungszeit relativ kurz, da für jedes Telegramm das Synchronisationszeichen und die Datensicherung nur einmal erforderlich ist. Zur Übertragung dieser Stationstelegramme kann beispielsweise jede Ortungsempfangsstation ein eigenes Sende-Empfangsgerät besitzen. Dann werden die Empfangsstationen zyklisch nacheinander von einem speziellen Stationsaufrufsender zur Abgabe der Stationstelegramme veranlasst. In der Zentrale werden die Stationstelegramme von einem Telegrammempfänger entgegengenommen und der weiteren Bearbeitung zugeführt. In diesem Fall ist ein zusätzlicher 2-Richtungs-Funkkanal erforderlich.

Der zentrale Stationsaufrufsender kann in einer weiteren vorteilhaften Ausführungsform eingespart werden. In diesem Fall werden die Funksender in den Ortungsempfangsstationen jedes Mal dann zur Aussendung der Stationstelegramme veranlasst, wenn der Eichsender aufgerufen wurde. Dieser Eichsender gibt in diesem Fall ebenso wie die Fahrzeuge in einem Eichtelegramm zusammen mit dem Messsignal weitere Informationen ab, durch die er identifiziert wird. Dieses Eichtelegramm läuft gleichzeitig in allen Empfangsstationen ein und veranlasst jede nach einer unterschiedlichen, fest eingestellten Zeit zur Abgabe ihres Stationstelegramms. In diesem Fall ist zusätzlich zu dem Funkkanal für die Fahrzeugaufrufe nur ein zusätzlicher 1-Richtungs-Funkkanal erforderlich. Auch dieser zusätzliche Funkkanal kann eingespart werden, wenn entsprechend einer weiteren vorteilhaften Ausführungsform die Stationstelegramme in demselben Funkkanal übertragen werden, der zum Aufruf der einzelnen Fahrzeuge dient.

Üblicherweise werden die Fahrzeuge zyklisch der Reihe nach von der Zentrale aus zur Abgabe ihres Messsignals und evtl. zusätzlicher Informationen aufgefordert. Auf diese Aufforderung hin sendet das entsprechende Fahrzeug ein Telegramm, welches das Messsignal in Form eines Peiltons und zusätzliche Daten, beispielsweise eine Fahrzeugkennung, Daten über den Fahrzeugzustand oder auch im Fahrzeug gemessene Wegedaten, enthält. Hierfür steht ein Duplex-Funkkanal zur Verfügung. Weil aber das Aufruftelegramm erheblich kürzer als das vom Fahrzeug gesendete Telegramm ist und in den Pausen zwischen den Aufruftelegrammen die Aufruffrequenz des Duplexkanals nicht genutzt wird, können diese Pausen zur Übertragung der Stationstelegramme von den Empfangsstationen zur Zentrale genutzt werden. Diese Telegrammaussendung wird wie im vorigen Fall von einem Taktgeber in der Empfangsstation gesteuert, welcher senderseits durch das Eichtelegramm synchronisiert wird.

Die Erfindung wird nachfolgend an Ausführungsbeispielen anhand der Zeichnung näher erläutert.

Es zeigt

Fig. 1 den prinzipiellen Aufbau einer erfindungsgemässen Hyperbelortungsanlage,

Fig. 2 in einer Diagrammdarstellung das Prinzip der Messwertkorrektur,

Fig. 3 und 4 den möglichen Aufbau und Inhalt eines Stationstelegrammes,

Fig. 5 und 6 zwei verschiedene Möglichkeiten für den zeitlichen Ablauf und den Zusammenhang der Fahrzeugortung und der Übertragung der Stationstelegramme.

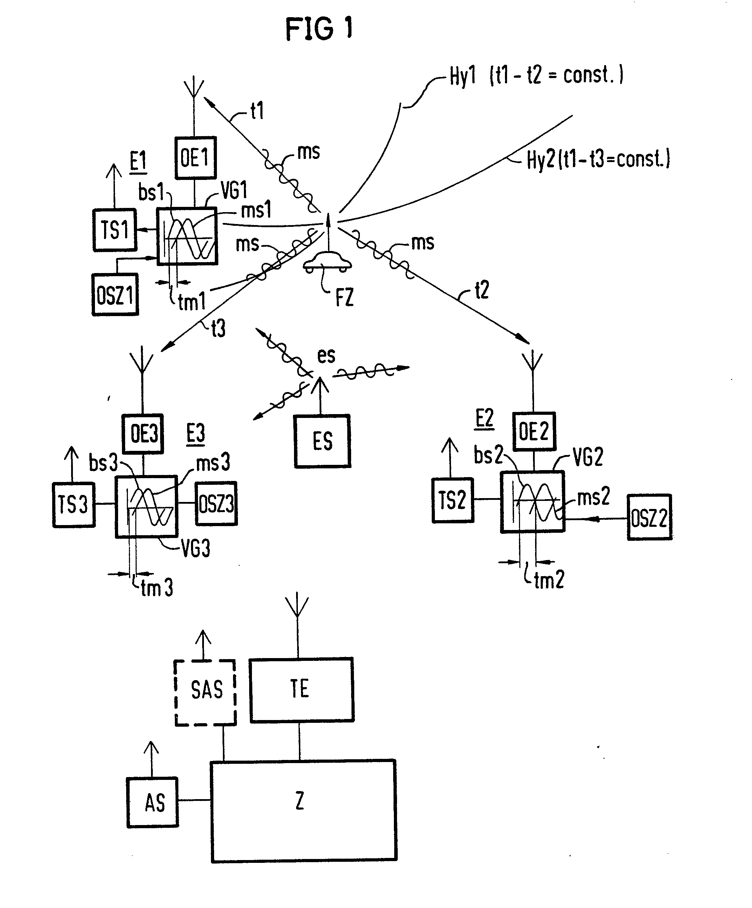

Fig. 1 zeigt den prinzipiellen Aufbau einer erfindungsgemässen Hyperbelortungsanlage. Die zu ortenden Fahrzeuge FZ werden jeweils zyklisch von einer Zentrale Z aus über einen Aufrufsender AS zur Abgabe ihres Messsignals aufgefordert. Daraufhin sendet das einzelne Fahrzeug FZ ein Messsignal ms von beispielsweise 2 kHz, welches auf einen hochfrequenten Träger von beispielsweise 100 MHz moduliert ist. Dieses Messsignal wird ungerichtet ausgestrahlt und von mindestens drei ortsfesten Empfangsstationen E1, E2 und E3 empfangen. Je nach dem Standort des Fahrzeugs benötigt das Messsignal unterschiedliche Laufzeiten t1, t2 und t3 zu den einzelnen Empfangsstationen und wird dort auch mit entsprechend unterschiedlicher Phasenverschiebung empfangen. Das Messsignal wird dort demoduliert und jeweils in einer Vergleichseinrichtung VG mit einem örtlichen Bezugssignal bs1, bs2 bzw. bs3 verglichen. Das Bezugssignal wird jeweils von einem örtlichen Quarzoszillator OSZ1, OSZ2 bzw. OSZ3 zugeführt. Der Phasenunterschied zwischen dem empfangenen Messsignal ms und dem Bezugssignal bs ist jeweils ein Mass für die Laufzeit vom Fahrzeug zu der betreffenden Empfangsstation. Dieser gemessene Phasenunterschied wird als Fahrzeugmesswert über einen Telegrammsender TS von jeder einzelnen Empfangsstation zur Zentrale Z über einen Funkkanal übertragen.

Die Zentrale besitzt einen Telegrammempfänger TE, über den die einzelnen Telegramme von den Empfangsstationen E1 bis E3 ankommen und zur Verarbeitung weitergeleitet werden. Aus den ermittelten Laufzeitdifferenzen zwischen t1, t2 und t3 lassen sich Hyperbeln zwischen jeweils zwei Empfangsstationen ermitteln, durch deren Schnittpunkt der Standort des Fahrzeuges FZ festgelegt ist. In Fig. 1 beschreibt beispielsweise die Hyperbel Hy1 den geometrischen Ort für die Differenz t1–t2, während die Hyperbel Hy2 den geometrischen Ort für die Differenz t1–t3 bildet.

Da aber die Bezugssignale bs1, bs2 und bs3 in den Empfangsstationen E1, E2 und E3 aufgrund von Ungenauigkeiten der Quarzoszillatoren OSZ1, OSZ2 und OSZ3 gegeneinander geringe Frequenzabweichungen aufweisen und dementsprechend auch ihre Phasenlage gegeneinander verschieben, können die Messwerte aus den einzelnen Empfangsstationen nicht ohne weiteres als Mass für die wahren Laufzeiten des Messsignals ms verwendet werden; vielmehr müssen Korrekturwerte zusätzlich gewonnen werden. Zu diesem Zweck ist im Ortungsgebiet ein ortsfester Eichsender ES vorgesehen, der ebenso wie die Fahrzeuge FZ in bestimmten Abständen aufgerufen wird und dann ein Eichsignal es abgibt. Auf diese Weise wird der Eichsender ES in der gleichen Weise wie die Fahrzeuge FZ geortet. Da aber sein Standort genau bekannt ist, lassen sich auch die Laufzeiten vom Eichsender zu den einzelnen Empfangsstationen genau berechnen. Der Eichsender wird natürlich so aufgestellt, dass er jeweils gute Funkverbindung zu allen Empfangsstationen besitzt, so dass sein Eichsignal nicht wie die Messsignale der Fahrzeuge durch Reflexionen verfälscht wird.

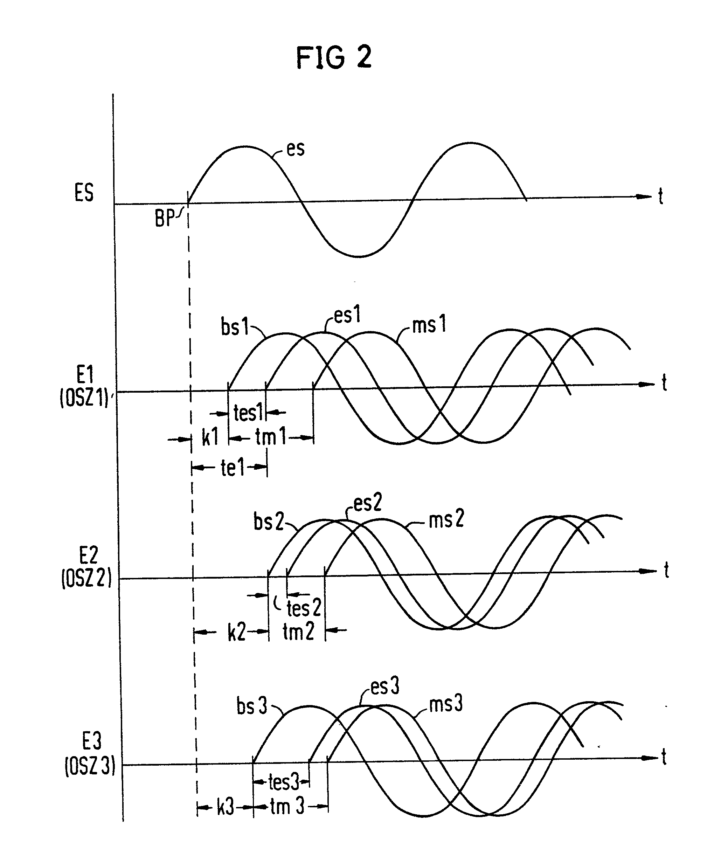

Fig. 2 zeigt das Prinzip der Korrektur mit Hilfe des Eichsenders. Wie erwähnt, wird in jeder Empfangsstation ein Bezugssignal bs mit Hilfe eines Quarzoszillators erzeugt. Diese Bezugssignale haben alle die fast gleiche Frequenz wie auch die Messsignale ms der Fahrzeuge und das Eichsignal es des Eichsenders. Allerdings sind die Bezugssignale untereinander nicht synchronisiert, und die gegenseitigen Abweichungen verändern sich aufgrund von Ungenauigkeiten der Quarzoszillatoren. Die Messsignale ms und das Eichsignal es werden in jeder Empfangsstation mit dem jeweiligen Bezugssignal bs verglichen. Um nun die unterschiedliche Phasenlage der Bezugssignale zu korrigieren und eine sinnvolle Auswertung der Messsignale zu erhalten, dient der Nulldurchgang des vom Eichsender ES ausgesendeten Eichsignals es als fiktiver Bezugspunkt BP für alle Bezugssignale bs. Das Eichsignal es wird in bestimmten Abständen beispielsweise nach dem Aufruf von jeweils zehn Fahrzeugen, ausgesendet und je nach den unterschiedlichen Entfernungen zu den Empfangsstationen mit entsprechenden Laufzeitverzögerungen als Signal es1 in der Empfangsstation E1, als es2 in der Empfangsstation E2 und als es3 in der Empfangsstation E3 empfangen. Dort wird es mit dem jeweiligen Bezugssignal bs1 bzw. bs2 bzw. bs3 verglichen, und es werden jeweils relative Phasenunterschiede tes1, tes2 und tes3 gemessen. Diese Messwerte werden digital über den Telegrammsender TS zur Zentrale übermittelt. Da aber die genaue Lage des Eichsenders und damit die Entfernungen zu den Empfangsstationen bekannt sind, sind auch die wirklichen Laufzeiten des Eichsignals es zu den einzelnen Empfangsstationen bekannt. Es sind dies die Laufzeiten te1 zur Empfangsstation E1, te2 bzw. te3 zu den Empfagsstationen E2 und E3. Daraus lässt sich nun für jedes Bezugssignal die relative Phasenverschiebung gegenüber dem fiktiven Bezugspunkt BP ermitteln, also für das Bezugssignal bs1 der Korrekturwert k1 und für die übrigen Bezugssignale die entsprechenden Korrekturwerte k2 und k3.

Mit diesen Korrekturwerten können nun auch die Messsignale ms der Fahrzeuge in die richtige Relation gebracht werden. Wird nun also ein Fahrzeug FZ aufgerufen und sendet dieses das Messsignal ms, so wird es als ms1 in der Empfangsstation E1 mit einer seiner Laufzeit entsprechenden Phasenverschiebung empfangen. Gegenüber dem Bezugssignal bs1 wird nun eine Phasendifferenz tm1 gemessen und zur Zentrale digital übertragen. Bei der Auswertung fügt man nun diesem Messwert tm1 den Korrekturwert k1 hinzu, um auf diese Weise die Laufzeitabweichung des Bezugssignals bs1 gegenüber dem gemeinsamen fiktiven Bezugspunkt BP zu berücksichtigen. In gleicher Weise werden bei den anderen Empfangsstationen die entsprechenden Korrekturwerte angewendet. Die Addition aus dem Messwert tm und dem Korrekturwert k ergibt zwar jeweils nicht die wahre Laufzeit t1, t2 bzw. t3 des Messignals vom Fahrzeug zur Empfangsstation, da das Eichsignal nicht mit den jeweiligen Fahrzeugsignalen synchronisiert ist und damit nicht dieselbe Phasenlage besitzt, doch genügt für die Hyperbelortung die Anwendung des fiktiven Bezugspunktes BP. Für die Auswertung benötigt man nicht die absoluten Laufzeiten, sondern nur die Laufzeitdifferenzen, so dass die auf den fiktiven Bezugspunkt BP bezogenen Korrekturwerte zu richtigen Ergebnissen führen.

Bei jedem Aufruf des Eichsenders ES werden neue Korrekturwerte k1, k2 und k3 berechnet und der Ortung zugrundegelegt. Für die zwischenliegenden Fahrzeugmessungen kann die laufende Verschiebung der Bezugssignale durch Interpolation der Korrekturwerte berücksichtigt werden, so dass zu dem Messzeitpunkt ein anderer Korrekturwert gilt. Ebenso kann der Korrekturwert jeweils für die folgenden Fahrzeugmessungen durch Extrapolation angepasst werden. Somit kann die relativ grosse Frequenzverschiebung der Bezugssignale in der Zentrale prognostizierend bei der Errechnung der Fahrzeugstandorte berücksichtigt werden. Dadurch sind keinerlei Einrichtungen zur Frequenzregelung oder zur Nachsynchronisation der Quarzfrequenzen in den Empfangsstationen erforderlich.

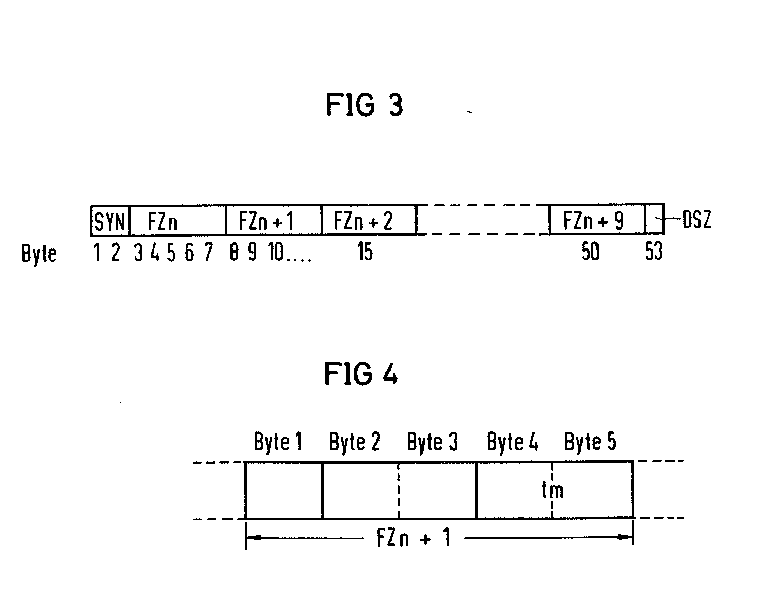

In jeder Empfangsstation werden die bei Eichung und Fahrzeugortung anfallenden unkorrigierten Messwerte zusammen mit zusätzlichen Informationen aus den einzelnen Fahrzeugtelegrammen zu einem Stationstelegramm zusammengestellt und zur Zentrale auf einem Funkkanal übertragen. Ein solches Stationstelegramm enthält zweckmässigerweise die Daten von etwa zehn Fahrzeugen. Fig. 3 zeigt den schematischen Aufbau eines solchen Stationstelegramms. Das Telegramm benötigt zunächst ein Synchronisationszeichen SYN und am Schluss ein Datensicherungszeichen DSZ; deren Länge fällt weniger ins Gewicht, wenn die Daten von mehreren Fahrzeugen in einem Telegramm enthalten sind. Im Beispiel sind die Daten der Fahrzeuge FZn bis FZn+9 enthalten. Dabei sind für jedes Fahrzeug fünf Byte vorgesehen. Zusammen mit zwei Byte für das Synchronisationszeichen und einem Byte für das Datensicherungszeichen ergeben sich also für ein Stationstelegramm 53 Byte. Die Verteilung der 5 Byte für ein Fahrzeug ist in Fig. 4 dargestellt. Dabei enthält beispielsweise das Byte Nr. 1 allgemeine Meldungen, die Bytes 2 und 3 vom Fahrzeug abgegebene Daten, beispielsweise im Fahrzeug gemessene Ortskenngrössen, Wegemessungen u. dgl., die Bytes 4 und 5 dann den in der Empfangsstation zu dem betreffenden Fahrzeug gemessenen Laufzeitwert, also den Wert tm aus Fig. 2. In gleicher Weise wie die Fahrzeugmessdaten werden auch die Messdaten des Eichsenders im Stationstelegramm mit übertragen, wenn der Eichsender mit aufgerufen war. Durch die gleichzeitige Übertragung der Daten für mehrere Fahrzeuge ergibt sich bei der Standortberechnung eine gewisse Zeitverzögerung, die im Mittel etwa eine Sekunde betragen kann. Sie kommt dadurch zustande, dass der Aufruf von beispielsweise zehn Fahrzeugen abgewartet werden muss, bevor ein Stationstelegramm zur Zentrale gesandt wird und dort die Standorte dieser zehn Fahrzeuge errechnet werden können.

Für den Abruf der Stationstelegramme gibt es verschiedene Möglichkeiten. Beispielsweise kann jede Empfangsstation zur Übertragung des Stationstelegramms ein eigenes Sende- und Empfangsgerät besitzen. In diesem Fall werden die Empfangsstationen E1, E2 und E3 zyklisch nacheinander von einem speziellen, zentralen Stationsaufrufsender SAS (Fig. 1) zur Abgabe der Stationstelegramme veranlasst. Die Stationstelegramme werden von einem zentralen Telegrammempfänger TE entgegengenommen und der Zentrale zur weiteren Bearbeitung zugeführt.

Der Stationsaufrufsender SAS kann aber auch eingespart werden, wenn man die Aussendung der Stationstelegramme in den Empfangsstationen über den Ortungsempfänger OE veranlasst. Hierzu wird das Signal des Eichsenders genutzt, das mit grosser Sicherheit in jeder Empfangsstation empfangen wird. Wie erwähnt, senden die Fahrzeuge wie auch der Eichsender beim Aufruf nicht nur das Messsignal ms bzw. das Eichsignal es, sondern ein Telegramm mit zusätzlichen Informationen, beispielsweise auch eine Kennung des Eichsenders. Dieses Kennungssignal vom Eichsender läuft gleichzeitig in allen Empfangsstationen ein und veranlasst jede nach einer unterschiedlichen, über entsprechende Verzögerungsglieder fest eingestellten Zeit zur Abgabe ihres Stationstelegramms. Erfolgt beispielsweise die Eichung alle zehn Sekunden und enthält ein Stationstelegramm die Daten von ca. 2 Sekunden, was zehn Fahrzeugaufrufen entspricht, so werden alle Ortungsempfangsstationen jeweils ein Stationstelegramm in insgesamt 2 Sekunden abgesetzt haben. Nach jeweils 2 Sekunden kann also jede Ortungsempfangsstation in diesem Fall von einem internen Taktgeber erneut zur Aussendung eines Stationstelegramms aufgefordert werden; mit dem Signal des Eichsenders wird also der interne Taktgeber synchronisiert. In diesem Fall ist zusätzlich zum Ortungsfunkkanal nur ein zusätzlicher 1-Richtungs-Funkkanal für die Übertragung der Stationstelegramme erforderlich.

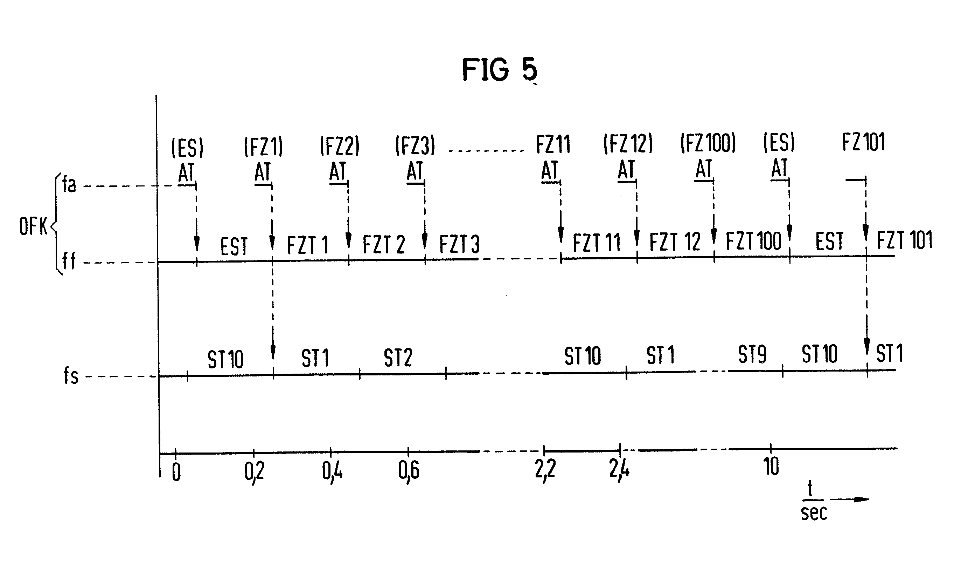

Fig. 5 zeigt den zeitlichen Ablauf und den Zusammenhang von Fahrzeugortung und -übertragung der Stationstelegramme für den oben beschriebenen Fall. Der Ortungsfunkkanal OFK enthält zwei Frequenzen, die Aufruffrequenz fa und die Fahrzeugfrequenz ff. Dazu kommt ein zweiter Funkkanal mit der Stationstelegrammfrequenz fs. Die Belegung der einzelnen Frequenzen ist mit der Zeit aufgetragen. Die Aufruffrequenz fa wird vom Aufrufsender AS (Fig. 1) jeweils nur kurzzeitig belegt, um durch ein Aufruftelegramm AT einmal den Eichsender, dann die einzelnen Fahrzeuge

9 **0006594** 10

FZ1, FZ2 ... FZ100 und dann bei Bedarf wieder den Eichsender ES aufzurufen. Mit dem Ende des Aufruftelegramms beginnt der betreffende Fahrzeugsender bzw. der Eichsender auf der Fahrzeugfrequenz ff sein Fahrzeugtelegramm FZT zu senden. Noch bevor dieses Fahrzeugtelegramm FZT bzw. Eichsendertelegramm EST beendet ist, wird bereits das nächste Fahrzeug auf der Aufruffrequenz fa aufgerufen. Mit dem Ende des Eichsendertelegramms EST werden die Empfangsstationen synchronisiert und zum Aussenden der Stationstelegramme angestossen, und zwar in einer vorgegebenen Reihenfolge mit fest eingestellten Zeitabständen. Es beginnt also die Station E1 und sendet das Stationstelegramm ST1, dann folgt das Stationstelegramm ST2 der Empfangsstation E2 usw. bis zur Station E10, welche das Stationstelegramm ST10 sendet. In diesem Fall wird also eine Anzahl von zehn Empfangsstationen angenommen. Über den internen Taktgeber sendet dann wieder die Station E1 ihr Stationstelegramm ST1 usw., wobei jedes Stationstelegramm jeweils die Daten der zuletzt gemessenen zehn Fahrzeuge enthält. Wird nun wieder der Eichsender ES aufgerufen, so werden über das Eichsendertelegramm die Taktgeber in den einzelnen Empfangsstationen neu synchronisiert und die Station E1 beginnt mit der Aussendung ihres Stationstelegramms ST1 einen neuen Zyklus. Die eingezeichneten Pfeile bedeuten jeweils einen zeitlich gekoppelten Anstoss zur Telegrammaussendung bzw. zur Synchronisierung.

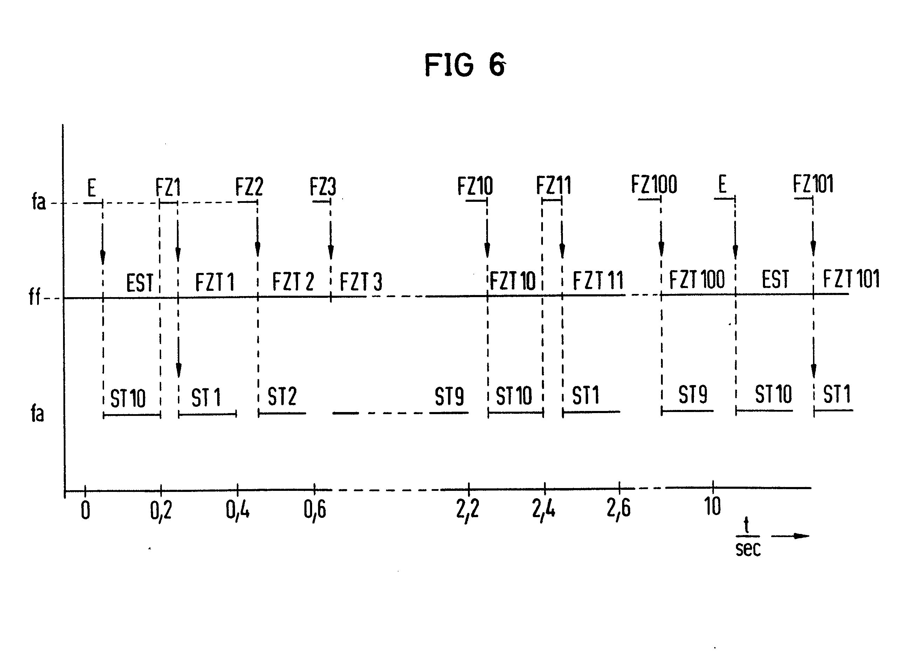

Wie in Fig. 5 zu sehen ist, wird die Aufruffrequenz fa jeweils nur kurzzeitig belegt, während für die Stationstelegrammfrequenz fs ein zusätzlicher Funkkanal benötigt wird. Diesen zusätzlichen Funkkanal kann man einsparen, wenn man die Aufruffrequenz gleichzeitig zur Übertragung der Stationstelegramme mit verwendet. Das ist möglich, weil das Aufruftelegramm erheblich kürzer als das Fahrzeugtelegramm ist, so dass die verbleibenden Pausen für die Übertragung der Stationstelegramme benutzt werden können. Die Fig. 6 zeigt den zeitlichen Ablauf für diesen Fall. Die Aufruffrequenz fa wird wie in Fig. 5 jeweils kurz benutzt, um den Eichsender oder ein Fahrzeug zur Aussendung seines Telegramms zu veranlassen. Diese Telegramme FZT bzw. EST werden wie in Fig. 5 auf der Fahrzeugfrequenz ff ausgesendet. In den Pausen der Aufruffrequenz fa, die im dargestellten Beispiel jeweils etwa 150 msec. dauern, wird jeweils das Stationstelegramm einer Empfangsstation übertragen. Die Telegrammaussendung wird dabei wieder von einem Taktgeber in der Empfangsstation gesteuert, der durch das Eichsendertelegramm EST wie im vorhergehenden Fall synchronisiert wird. Damit spart man also einen zusätzlichen Funkkanal; allerdings steht für die Übertragung der Stationstelegramme nur ein Teil der Zeit zur Verfügung, so dass die zu übertragende Informationsmenge kleiner als im vorhergehenden Fall ist. Ausserdem muss sichergestellt werden, dass der Aufrufsender AS seine Aufruftelegramme innerhalb eines festen Zeitrasters sendet.

**Patentansprüche**

1. Phasenvergleichs-Hyperbelverfahren zur Ortung flächengebundener Fahrzeuge, wobei das zu ortende Fahrzeug auf Abfrage zyklisch jeweils auf einen hochfrequenten Träger modulierte Messsignale aussendet, welche von mehreren getrennt angeordneten Empfangsstationen empfangen, demoduliert und mit einem von einem stationären Quarzoszillator erzeugten Bezugssignal gleicher Frequenz verglichen werden, wobei die jeweiligen Phasenunterschiede digital zu einer Zentrale übermittelt und zur Bildung von Laufzeitdifferenzen ausgewertet werden, um daraus die aktuelle Fahrzeugposition als Schnittpunkt der den Laufzeitdifferenzen entsprechenden Hyperbelkoordinaten zu ermitteln, und wobei ein Eichsender von Zeit zu Zeit Eichsignale zur Gewinnung von Korrekturwerten an die Empfangsstationen sendet, dadurch gekennzeichnet, dass die Eichsignale (es1, es2, es3) in gleicher Weise wie die Messsignale (ms1, ms2, ms3) der Fahrzeuge (FZ) ausgesendet, in den Empfangsstationen (E1, E2, E3) in den Abfragezyklus für die Fahrzeuge eingeschlossen und in der Zentrale (Z) ausgewertet werden, wobei durch Vergleich mit den aus der genau bekannten Position des Eichsenders (ES) errechneten Laufzeiten der Eichsignale (es1, es2, es3) Korrekturwerte (k1, k2, k3) für die unterschiedliche Phasenlage der Bezugssignale (bs1, bs2, bs3) in den verschiedenen Empfangsstationen (E1, E2, E3) gewonnen und bei der Bildung der Hyperbelkoordinaten für die Fahrzeugortung berücksichtigt werden.

2. Verfahren nach Anspruch 1, dadurch gekennzeichnet, dass aus den unterschiedlichen Korrekturwerten, die bei zwei zeitlich versetzten Aufrufen des Eichsenders ermittelt wurden, durch Interpolation bzw. Extrapolation weitere Korrekturwerte für den jeweiligen Zeitpunkt eines zwischenliegenden oder nachfolgenden Fahrzeugaufrufs gewonnen werden.

3. Verfahren nach Anspruch 1 oder 2, dadurch gekennzeichnet, dass die Häufigkeit der Aufrufe des Eichsenders durch die Änderungsgeschwindigkeit der nacheinander ermittelten Korrekturwerte bestimmt wird.

4. Verfahren nach einem der Ansprüche 1 bis 3, dadurch gekennzeichnet, dass die Messdaten von jeweils mehreren hintereinander abgefragten Fahrzeugen jeweils in einem gemeinsamen Stationstelegramm (ST1 ... ST10) zur Zentrale gesendet werden.

5. Verfahren nach einem der Ansprüche 1 bis 4, dadurch gekennzeichnet, dass die einzelnen Empfangsstationen zyklisch nacheinander von einem bei der Zentrale vorgesehenen Stationsaufrufsender (SAS) zur Abgabe der Stationstelegramme veranlasst werden.

6. Verfahren nach einem der Ansprüche 1 bis 4, dadurch gekennzeichnet, dass der Eichsender bei jedem Aufruf ein das Eichsignal und die Kennung des Eichsenders enthaltendes Telegramm (EST) aussendet, welches die Empfangsstationen nach einer fest eingestellten Zeitfolge zur Abgabe ihrer Stationstelegramme veranlasst.

7. Verfahren nach einem der Ansprüche 1 bis 6, dadurch gekennzeichnet, dass die einzelnen Fahrzeuge (FZ) und der Eichsender (ES) in zyklischer Reihenfolge durch einen Aufrufsender (AS) zur Abgabe des Messsignals (ms) bzw. des Eichsignals (es) sowie zusätzlicher Informationen (FZT) aufgerufen werden, wobei die Aufruffrequenz (fa) jeweils nur kurzzeitig benutzt wird, und dass in den Pausen zwischen den Aufruftelegrammen (AT) jeweils eine Empfangsstation (E1, E2, E3) ihr Stationstelegramm (ST) auf derselben Frequenz (fa) zur Zentrale (Z) sendet.

8. Einrichtung zur Durchführung des Verfahrens nach Anspruch 1, gekennzeichnet durch eine Zentrale (Z), mehrere Empfangsstationen (E1, E2, E3) sowie einen Eichsender (ES), wobei in jeder Empfangsstation (E1, E2, E3) jeweils ein Ortungsempfänger (OE1, OE2, OE3), ein Quarzoszillator (OSZ1, OSZ2, OSZ3), eine Phasenvergleichseinrichtung (VG1, VG2, VG3) sowie ein Telegrammsender (TS1, TS2, TS3) vorgesehen sind, wobei ferner in der Zentrale ein Telegrammempfänger (TE), ein Aufrufsender (AS) zur zyklischen Abfrage der zu ortenden Fahrzeuge (FZ) sowie des Eichsenders (ES) und eine Auswerteeinrichtung zur Bildung von Hyperbelkoordinaten aus den von den einzelnen Empfangsstationen empfangenen Messwerten vorgesehen sind.

**Claims**

1. A method for locating surface vehicles using hyperbolic phase comparison wherein, in response to an interrogation, the vehicle to be located cyclically emits modulated measuring signals on respective high frequency carriers, which measuring signals are received by a plurality of separately arranged receiving stations, demodulated and compared with a reference signal of the same frequency produced by a stationary oscillator, and wherein the respective phase differences are digitally transmitted to a central unit and analysed for the formation of transit time differences in order to determine therefrom the actual vehicle position as the intersecting point of the hyperbolic coordinates, which correspond to the transit time differences, and wherein from time to time a calibration transmitter transmits calibration signals to the receiving stations in order to obtain correction values, characterized in that the calibration signals (es1, es2, es3) are transmitted in the same fashion as the measuring signals (ms1, ms2, ms3) of the vehicles (FZ) and included in the interrogation cycle for the vehicles in the receiving stations (E1, E2, E3) and analysed in the central unit (Z), where by comparison with the transit times of the calibration signals (es1, es2, es3), which have been calculated from the exactly known position of the calibration transmitter (ES), correction values (kl, k2, k3) are obtained for the different phase position of the reference signals (bs1, bs2, bs3) in the different receiving stations (E1, E2, E3) and considered in the formation of the hyperbolic coordinates for the vehicle location.

2. A method as claimed in Claim 1, characterized in that further correction values for the respective time of as intermediate or following vehicle call are obtained by interpolation or extrapolation from the different correction values which have been determined in two calls staggered in time from the calibration transmitter.

3. A method as claimed in Claim 1 or 2, characterized in that the frequency of the calls of the calibration transmitter is determined by the change of speed of the consecutively determined correction values.

4. A method as claimed in one of Claims 1 to 3, characterized in that the items of test data of a plurality of consecutively interrogated vehicles are in each case respectively transmittet to the central unit in a common station telegram (St1 ... St10).

5. A method as claimed in one of Claims 1 to 4, characterized in that the individual receiving stations are caused to emit the station telegrams cyclically in succession by a station calling transmitter (SAS) provided in the central unit.

6. A method as claimed in one of Claims 1 to 4, characterized in that for each call, the calibration transmitter emits a telegram (EST) which contains the calibration signal and the characteristic of the calibration transmitter and which causes the receiving stations to emit their station telegrams in a positively defined time sequence.

7. A method as claimed in one of Claims 1 to 6, characterized in that the individual vehicles (FZ) and the calibration transmitter (ES) are called up in cyclic succession by a call transmitter (AS) in order to emit the measuring signal (ms) or the calibation signal (es) as the case may be, and items of additional information (FZT), the call frequency (fa) being only temporarily used in each case, and that in the pauses between call telegrams (AT), one receiving station (E1, E2, E3) transmits its station telegram (ST) on the same frequency (fa) to the central unit (Z) in each case.

8. A system for implementing the method claimed in Claim 1, characterized by a central unit (Z), a plurality of receiving stations (E1, E2, E3) and a calibration transmitter (ES), wherein in each receiving station (E1, E2, E3) there are arranged a location receiver (OE1, OE2, OE3), a quartz oszilator (OSZ1, OSZ2, OSZ3), a phase comparison device (VG1, VG2, VG3) and a telegram transmitter (TS1, TS2, TS3), wherein further the central unit is provided with a telegram receiver (TE), a call transmitter (AS) for the cyclic interrogation of the vehicles (FZ) to be located and of the calibration transmitter (ES) and provided with an analysis device for the formation of hyperbolic coordinates from the test values received by the individual receiving stations.

**Revendications**

1. Procédé hyperbolique de comparaison de phase pour la détermination de la position, dans une zone donnée, de véhicules liés au sol, du type dans lequel le véhicule dont la position est à déterminer émet cycliquement, après interrogation, des signaux de mesure qui sont modulés avec une porteuse haute fréquence et qui sont reçus par plusieurs postes de réception disposés isolément les une des autres, démodulés et comparés avec un signal de référence de même fréquence et produit par un oscillateur à quartz stationnaire, dans lequel les différences de phases sont transmises sous forme numérique à une centrale et sont évaluées pour former des différences de durées de transit en vue d'en déterminer la position actuelle d'un véhicule sous la forme d'un point d'intersection des coordonnées hyperboliques qui correspondent aux différences des durées de transit, et dans lequel un émetteur étalon émet de temps en temps des signaux d'étalonnage pour les postes de réception en vue de l'obtention de valeurs de correction, caractérisé par le fait que les signaux d'étalonnage (es1, es2, es3) sont, de la même façon que les signaux de mesure (ms1, ms2, ms3) des véhicules (FZ) émis, inclus dans les postes de réception (E1, E2, E3) dans le cycle d'interrogation pour les véhicules et évalués dans la centrale (Z), la comparaison avec les durées de transit des signaux d'étalonnage (es1, es2, es3), calculées à partir de la position connue avec précision de l'émetteur (ES), des signaux d'étalonnage permettant d'obtenir des valeurs de correction (k1, k2, k3) pour les positions de phases différentes, dans les différents postes de réception et d'en tenir compte lors de la formation des coordonnées hyperboliques pour la détermination de la position des véhicules.

2. Procédé selon la revendication 1, caractérisé par le fait qu'à partir de deux valeurs de corrections différentes, déterminées au cours de deux appels, décalés dans le temps, de l'émetteur des signaux d'étalonnage, on obtient, par interpolation ou par extrapolation d'autres valeurs de correction pour l'instant d'un appel intermédiaire ou suivant d'un véhicule.

3. Procédé selon la revendication 1 ou 2, caractérisé par le fait que la fréquence des appels de l'émetteur de signaux d'étalonnage est déterminée par la vitesse de la modification des valeurs de correction déterminées successivement.

4. Procédé selon l'une des revendications 1 à 3, caractérisé par le fait que les données de mesure de chacun de plusieurs véhicules interrogés successivement sont envoyées au central, avec un télégramme de poste commun.

5. Procédé selon l'une des revendications 1 à 4, caractérisé par le fait que les différents postes de réception sont successivement sollicités par un émetteur d'appel de poste (SAS) prévu à la centrale pour émettre les télégrammes du poste.

6. Procédé selon l'une des revendications 1 à 4, caractérisé par le fait que l'émetteur des signaux d'étalonnage émet à chaque appel un télégramme (EST) contenant le signal d'étalonnage et l'identification de l'émetteur des signaux d'étalonnage, télégramme qui provoque l'émission par les stations de réception de leurs télégrammes de station, selon une séquence déterminée dans le temps.

7. Procédé selon l'une des revendications 1 à 6, caractérisé par le fait que les différents véhicules (FZ) et l'émetteur d'étalonnage (ES) sont appelés suivant une séquence cyclique par l'émetteur d'appel (AS) pour émettre le signal de mesure (ms) ou le signal d'étalonnage (es) ainsi que des informations supplémentaires (FZT), la fréquence d'appel (fa) étant utilisée pour de courtes durées, et par le fait que dans les intervalles entre les télégrammes d'appel (AT) une station de réception (E1, E2, E3) émet son télégramme de station (ST) sur la même fréquence (fa) vers la centrale (Z).

8. Installation pour la mise en œuvre du procédé selon la revendication 1, caractérisée par une centrale (Z), plusieurs stations de réception (E1, E2, E3) et un émetteur d'étalonnage (ES), chacune des stations de réception (E1, E2, E3) étant pourvue d'un récepteur de détermination de la position (OE1, OE2, OE3), d'un oscillateur à quartz (OSZ1, OSZ2, OSZ3), d'un dispositif comparateur de phases (VG1, VG2, VG3) ainsi que d'un émetteur de télégramme (TS1, TS2, TS3), alors qu'il est prévu, en plus, dans la centrale un récepteur de télégramme (TE), un émetteur d'appel (AS) pour l'interrogation des véhicules (FZ) à localiser, ainsi qu'un émetteur d'étalonnage (ES) et un dispositif d'évaluation pour former les coordonnées hyperboliques à partir des valeurs de mesure reçues par les différentes stations de réception.

# FIG 1

FIG 2

## FIG 3

| SYN | FZn | FZn + 1 | FZn + 2 | | | FZn + 9 | | DSZ |

Byte   1 2   3 4 5 6 7   8 9 10....     15               50    53

## FIG 4

| Byte 1 | Byte 2 | Byte 3 | Byte 4 | Byte 5 |
|--------|--------|--------|--------|--------|
|        |        |        |        | tm     |

FZn + 1

FIG 5

# FIG 6